# EUROPEAN PATENT APPLICATION

(11) **EP 1 626 385 A2**
(43) Date of publication of application: **15.02.2006**
(21) Application number: 05004218.3
(22) Date of filing: 25.02.2005
(51) Int. Cl.: G09B 5/06, G09B 7/04

(54) **Pedagogical controller used with learning cards**

(30) Priority: 09.08.2004 US 913406
(71) Applicant: Liao, Ho-Hsin, Taipei, 106 (TW)
(72) Inventor: Liao, Ho-Hsin, Taipei, 106 (TW)
(74) Representative: Eder, Christian

(57) **Abstract**

An education-learning controller is used with a set of learning cards and a video/audio player, wherein each of the learning cards has an associated identification code. The education-learning controller has a casing with a slot into which the learning card can be placed. When the user places the learning card in the slot, the video/audio player will play corresponding video/audio content according to the identification code of the learning card.

## Description

### BACKGROUND OF THE INVENTION

### 1. Field of the Invention

The present invention relates to an education or entertainment method/device, and more particularly to children's education, such as language education.

### 2. Description of the Related Art

Many different methods and tools are available for children's language education. One very popular language learning tool provides a learning machine with several learning cards. Each learning card usually has a word and a corresponding picture printed thereon. The learning method involves allowing a child to pick up one of learning cards and place it into a slot of the learning machine. The learning machine will then play the corresponding sound. For example, when a learning card with the word "Dog" is inserted into the learning machine, the child will hear, "Dog. Do you like dogs?". This learning method has been implemented for over twenty years. Many major language learning companies (e.g. Disney™) still use it as a chief learning tool.

However, since children can access a great deal of multimedia content these days, the above learning tool is no longer sufficiently attractive. In addition, if the learning machine is to play high-quality sounds, or provide many sentences, the costs of the voice IC/memory become very high.

### SUMMARY OF THE INVENTION

An objective of the present invention is to enable very young children to use a set of learning cards to easily control a video/audio player (e.g. a DVD player). For example, it is very difficult for children of two to four years of age to use a DVD remote control to control the DVD player, but with the present invention, this becomes very easy.

Another objective of the present invention is to reduce costs. With the present invention, the education-learning controller does not need to store the learning content itself, and so it does not require a large memory. The learning content in the present invention is stored on the optical disk (e.g. the DVD ROM), so that costs are not only much lower but furthermore the learning content in the present invention can show the video/audio content.

To achieve these objectives, an education-learning controller is used with a set of learning cards and a video/audio player, wherein each of the learning cards is associated with at least an identification code. The education-learning controller has a casing with a slot into which the learning card can be put.

When the user inserts the learning card into the slot of the education-learning controller, a code detector module detects the identification code of the learning card, so that the education-learning controller can emit a wireless controlling code to control the video/audio player. Then, the video/audio player plays corresponding video/audio content according to the identification code of the learning card.

According to another embodiment, the functionality of the education-learning controller can be integrated with a video/audio player and a screen. Therefore, the integrated video/audio player can also play corresponding video/audio content according to the identification code of the learning card.

According to another embodiment, an education-learning controller integrates a touch pad on which learning cards can be placed, so that the identification code for each of the learning cards is not required. The video/audio player will play corresponding video/audio content according to the touching position of the learning card.

Other objects, advantages, and novel features of the invention will become more apparent from the following detailed description when taken in conjunction with the accompanying drawings.

### BRIEF DESCRIPTION OF THE DRAWINGS

FIG. 1 illustrates a first embodiment of the present invention.
FIG. 2 is a schematic drawing of the present invention.
FIG. 3 is a circuit diagram of the first embodiment.
FIG. 4 is a circuit diagram of a second embodiment.
FIG. 5 illustrates the second embodiment.
FIG. 6 illustrates a third embodiment.
FIG. 7 illustrates a fourth embodiment.
FIG. 8 illustrates a fifth embodiment.
FIG. 9 illustrates a sixth embodiment.
FIG. 10 is a circuit diagram of the sixth embodiment.
FIG. 11 illustrates a seventh embodiment.
FIG. 12 is a circuit diagram of the seventh embodiment.
FIG. 13 illustrates an eighth embodiment.

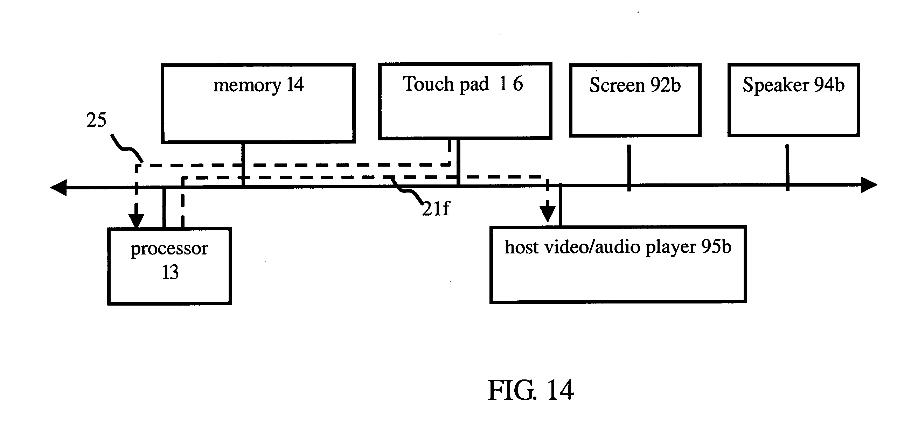

FIG. 14 is a circuit diagram of the eighth embodiment.
FIG. 15 is a flowchart for a test mode of the first embodiment.
FIG. 16 is a flowchart for a test mode of the sixth embodiment.

### DETAILED DESCRIPTION OF THE PREFERRED EMBODIMENT

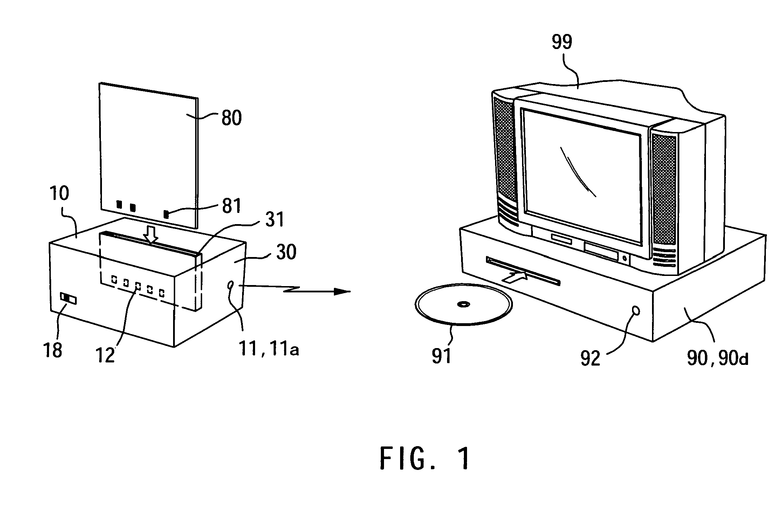

Please refer to FIGS. 1~3 for the first embodiment of the present invention. An education-learning controller 10 is used with a set of learning cards 80 to control a video/audio player 90, such as a DVD player 90d. Since the DVD player 90d is very popular device, the embodiment of the video/audio player 90 uses the DVD player 90d hereafter. Traditionally, users use infrared remote controls (not shown) that emit infrared signals to an infrared receiver 92 on the DVD player 90d to control the DVD player 90d. However, in the present invention, users (especially children) can use a set of learning cards 80 to actuate the education-learning controller 10 to emit infrared signals to control the DVD player 90d, wherein each of the learning cards 80 has a unique identification code 81 thereon.

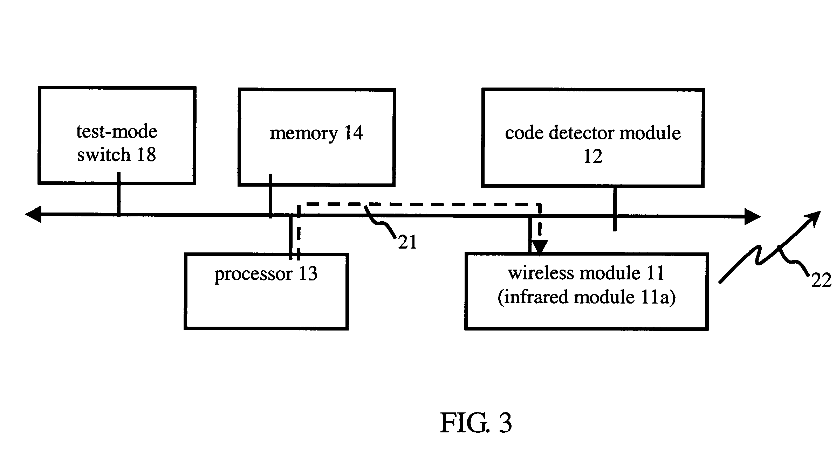

According to the first embodiment, the education-learning controller 10 has a casing 30 with a slot 31 into which the learning card 80 can be placed. Fig. 3 shows a circuit diagram in accordance with the first embodiment, which comprises a wireless module 11, a code detector module 12, a processor 13 and a memory 14.

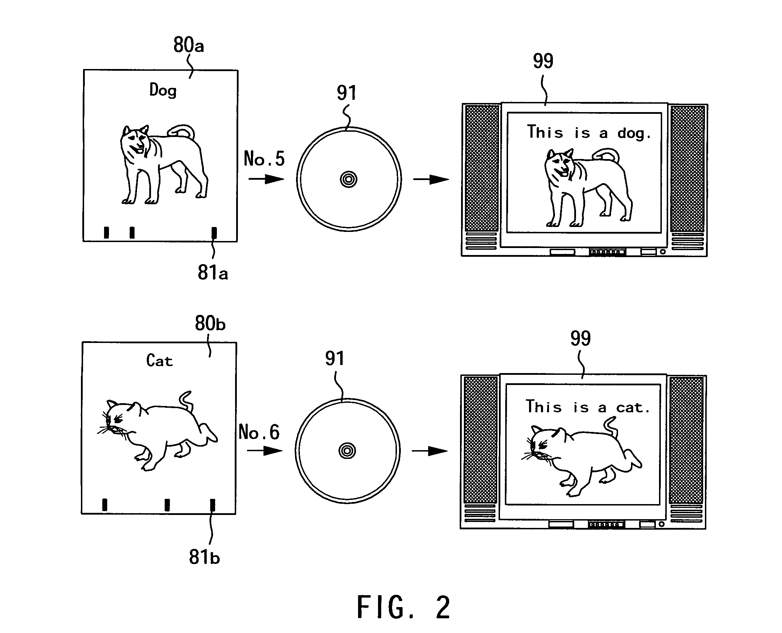

The code detector module 12 is coupled to the processor 13 and disposed at an appropriate position (e.g. the bottom of the slot 31) to detect the identification code 81 of the learning card 80. The identification code 81 in the first embodiment uses a different number and position of "black bars" to represent different codes. For example, the code detector module 12 comprises five sensors (e.g. infrared sensors), so each learning card 80 may have five coded-areas that are either "black bar" or "non-black bar" (e.g. blank bar) regions. Therefore, 32 different codes can be represented. For example, referring to Fig.2, the learning card 80a has a "Dog" picture and the English word "Dog", for which identification code 81a is "5". When the learning card 80a is placed inside the slot 31, the code detector module 12 reads the identification code 81a. There are many technologies for identification codes and corresponding code detector modules, such as using magnetic technology (e.g. a magnetic material coded onto learning cards, with corresponding magnetic sensors), using optical technology (e.g. bar codes, with bar code scanners), using mechanical technologies, RFIC, etc. Such technologies may be referred to in US patent 5,450,078. Since the subject matter of the present invention does not involve improvements to code detecting technology, and instead simply utilizes it, the code detecting technology is not elaborated upon.

The memory 14 can store necessary programs and/or internal controlling codes 21. The internal controlling codes 21 should corresponded to the brand or model of the DVD player 90d. When the processor 13 receives, for example, the identification code 81a (i.e. code "5"), the processor 13 obtains the corresponding internal controlling codes 21 in response to code "5" from the memory 14. Furthermore, the memory 14 can store many sets of internal controlling codes for different brands or models of DVD players, so that the education-learning controller 10 can control many different brands or models of the DVD players. Noted that the memory 14 can be omitted if, for example, the processor 13 can generate the corresponding internal controlling codes 21 by utilizing a mathematical rule.

Finally, the wireless module 11, in response to the internal controlling codes 21, generates a wireless controlling code 22 (e.g. an infrared code) for the infrared receiver 92 of the DVD player 90d.

FIG 2 schematically explains the primary purpose of the present invention. An optical disk 91 (e.g. VCD, DVD) can store multiple sections of video/audio content and controlling codes. For example, a DVD may have 20 sections of video/audio content. If a user desires to watch "Section 5", when "Menu" ("Menu" is usually the first DVD content to be displayed) appears on the TV, the user presses "5" (some DVD players also require "Enter" to be pressed after "5") on the numerical keys of a remote control. In the same manner, if the user wants to watch "Section 16", "+10" and "6" (or "1", "6", "Enter") should be pressed. Nevertheless, the present invention can enable very young children to use a set of learning cards 80 and the education-learning controller 10 to choose which section of video/audio content is to be played. For example, the learning card 80a (corresponding to "Section 16") is placed into the education-learning controller 10, the education-learning controller 10 emits wireless controlling codes 22, which represent "+10" and "6", to the DVD player 90d, and hence the content of "Section 16" of the DVD will be displayed on a television 99. In the preferred design, after the content of "Section 16" has played, the display content of the DVD should go back to "Menu" (e.g. "Section 16" can have an instruction code to return to the "Menu"). Therefore, since the "Menu" is displayed again, when another learning card 80b with the identification code 81b (corresponding to "Section 6" ) is placed in the education-learning controller 10, the DVD player 90d will play the content of "Section 6" of the DVD on the television 99. Again, when "Section 6" has finished playing, the "Menu" is displayed to await the input provided by another learning card.

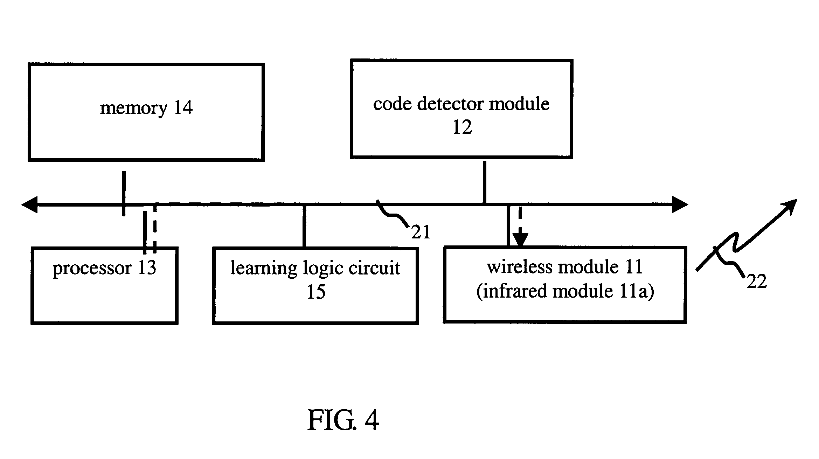

Please refer to FIG. 4, which is a circuit diagram in accordance with the second embodiment. In order to control different brands of DVD players, the memory 14 shown in FIG. 3 can store multiple sets of controlling codes for different brands of DVD players. However, another way to do this is to add a learning logic circuit 15, and the infrared module 11a should use a dual-mode emitting and receiving module. With the learning logic circuit 15 (e.g. a learning chip), the education-learning controller 10 can learn the controlling codes from the original remote control (not shown) of the DVD player 90d through the infrared module 11a, and then the controlling code can be stored in the memory 14.

The above-mentioned circuits or modules are well known devices. Please refer to prior art infrared remote controls, universal remote controls, or US Patent 5,450,078 for circuit designs and code detection ideas.

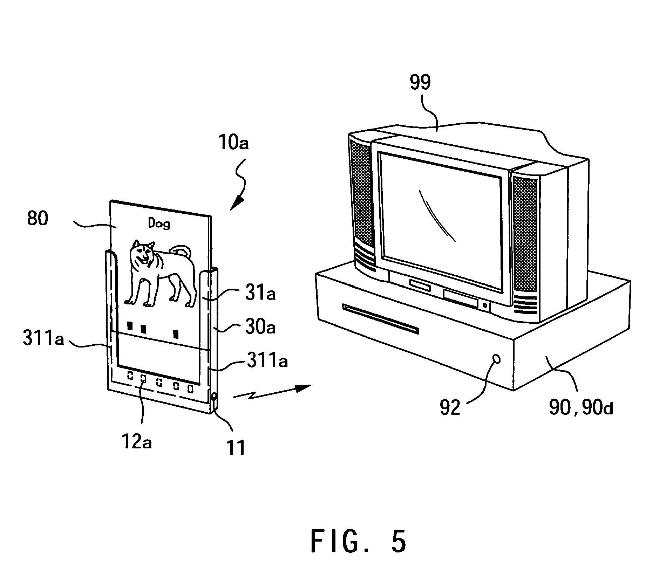

Please refer to FIG. 5 for a mechanical structure in accordance with the second embodiment. The casing 30a of the education-learning controller 10a has a flat shape, and has a different design for slot 31a. The slot 31 a has a pair of guides through 311 a for the learning cards 80.

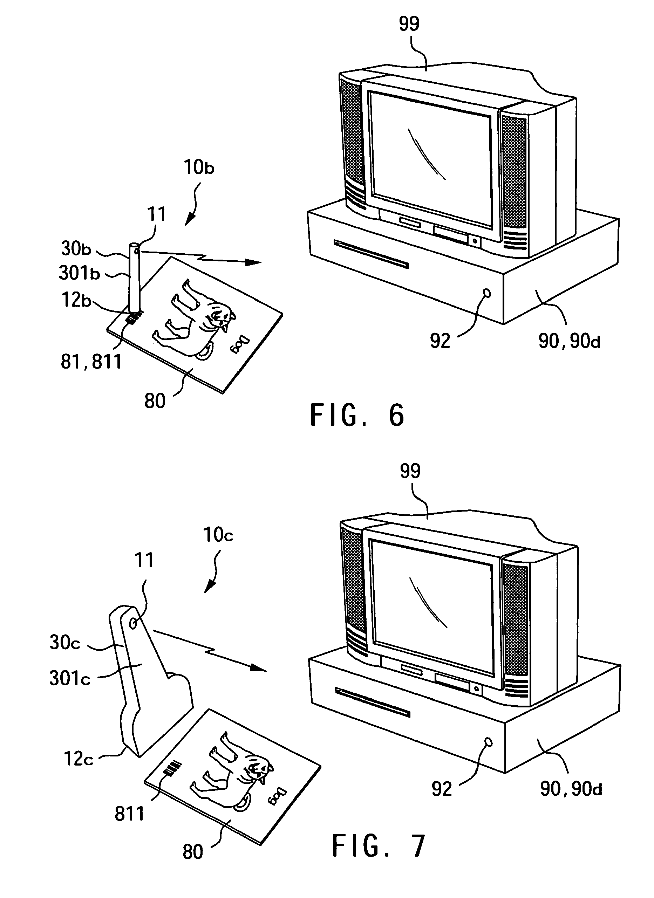

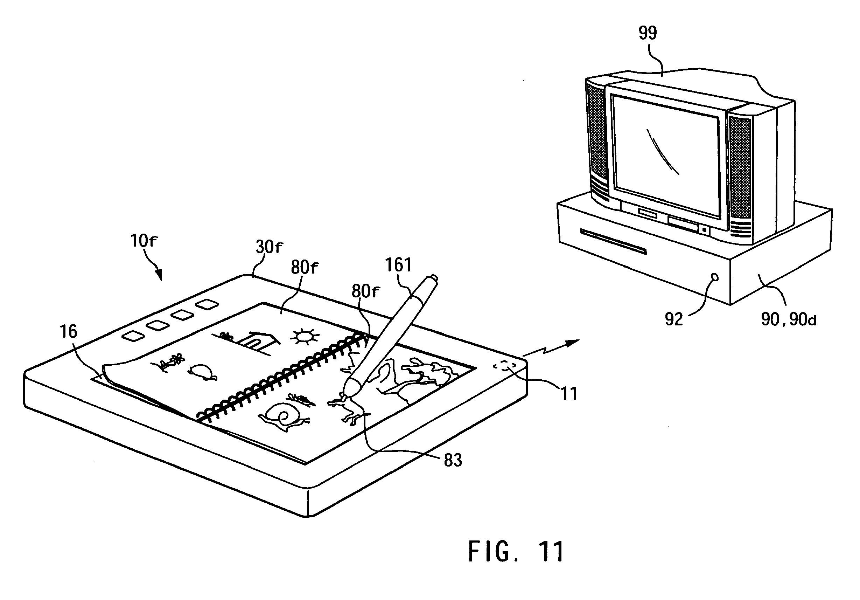

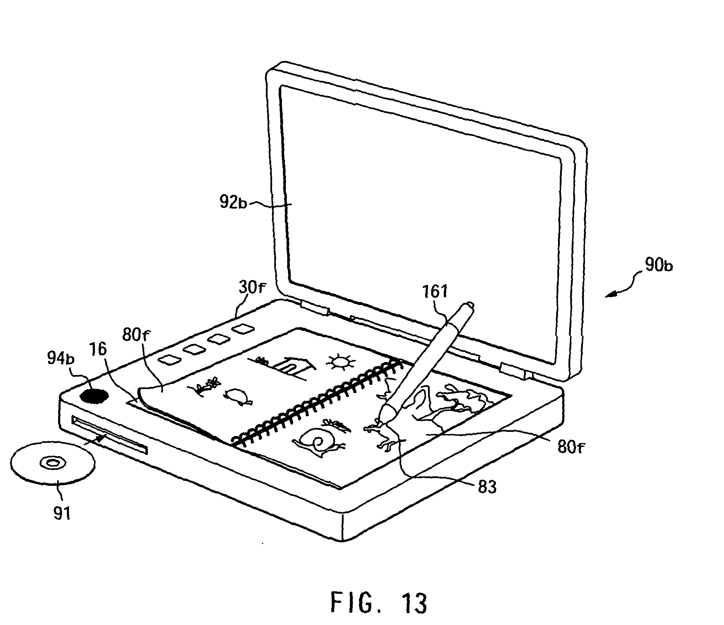

Please refer to FIG. 6 for a mechanical structure in accordance with the third embodiment. The casing 30b of the education-learning controller 10b has a hold member 301b. The code detector module 12b is mounted on one end of the casing 30b, so that the user can hold the hold member 301b in a moving manner to scan the identification code 81 on the learning card 80. In the third embodiment, the identification code 81 is bar code 811, and therefore the education-learning controller 10b basically combines the functions of the prior art optical scanner and the wireless module 11. Please note that each learning card 80 can also has more than one picture and corresponding bar code. In addition, learning cards 80 can be coupled together like a book (e.g. referring FIG. 11 & FIG. 13), so that the material of the learning cards 80 should be thinner, or be the same or similar thickness as a paper sheet.

Please refer to FIG. 7 for a mechanical structure in accordance with the fourth embodiment, which is similar to the third embodiment. The casing 30c of the education-learning controller 10c also has a hold member 301c. However, the code detector module 12c uses a prior art laser gun, a CCD (charge-coupled device) and the like. Therefore when scanning, the user can hold the member 301b in a non-moving manner to scan the bar code 811 on the learning card 80.

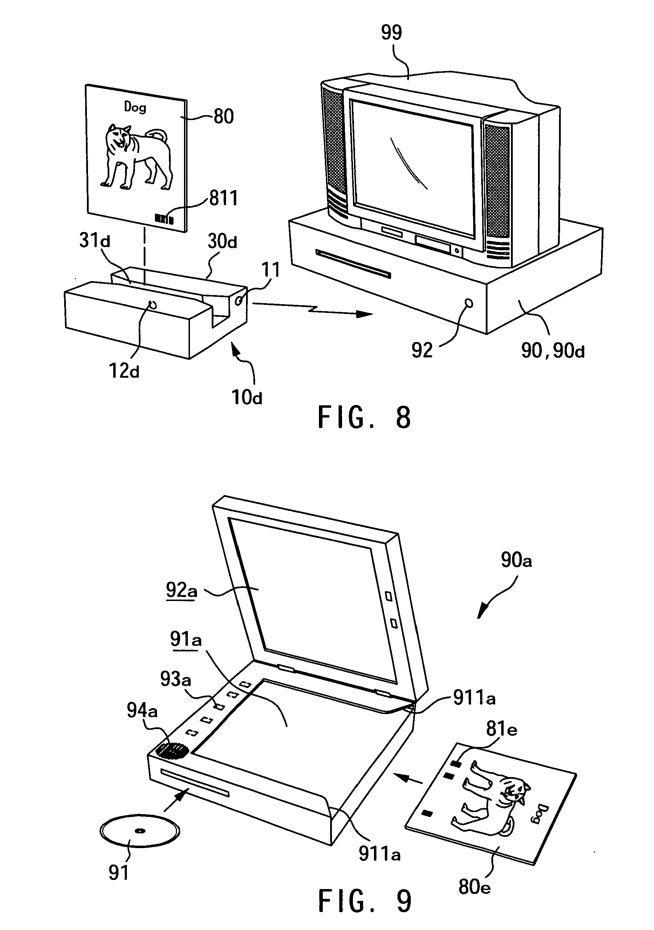

Please refer to FIG. 8 for a mechanical structure in accordance with the fifth embodiment. The casing 30d of the education-learning controller 10d is similar to the prior art "Barcode Slot Reader". The user moves the learning card 80 through the slot 31d. In this manner, the code detector module 12d is able to scan the bar code 811.

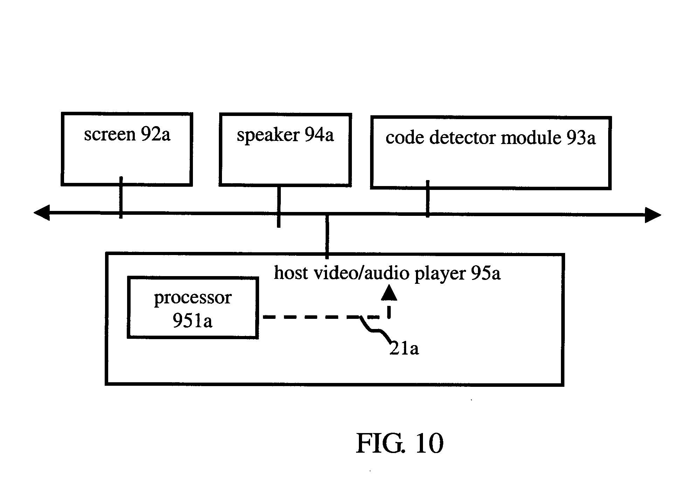

Please refer to FIGS. 9~10 for the sixth embodiment. The video/audio player 90a, the present invention, comprises a video/audio player host 95a, which has circuitry similar to that of traditional video/audio players (e.g. DVD players). However, the video/audio player 90a further comprises a screen 92a, a speaker 94a and a code detector module 93a. In addition, the video/audio player 90a has an operational area 91a with a pair of slots 911 a that accept the learning cards 80e. The code detector module 93a is disposed at an appropriate position on the operational area 91a to detect the identification code 81e of the learning card 80e and generate a corresponding signal for the processor 951 a of the host video/audio player 95a. The processor 951a then generates an internal controlling code 21 a so that the corresponding digital media, for example, "Section 5" of the DVD 91, will be played and displayed on the screen 92a. Since the video/audio player 90a integrates the education-learning controller 10a, the DVD player 90d and the television 99 shown in the FIG. 5, the wireless module 11 can therefore be omitted. Please note that although the host video/audio player 95a can use the processor 951a to handle code processing, such as code detection or internal controlling codes, another individual processor could also be added to handle code processing for cost saving purposes, or for other purpose.

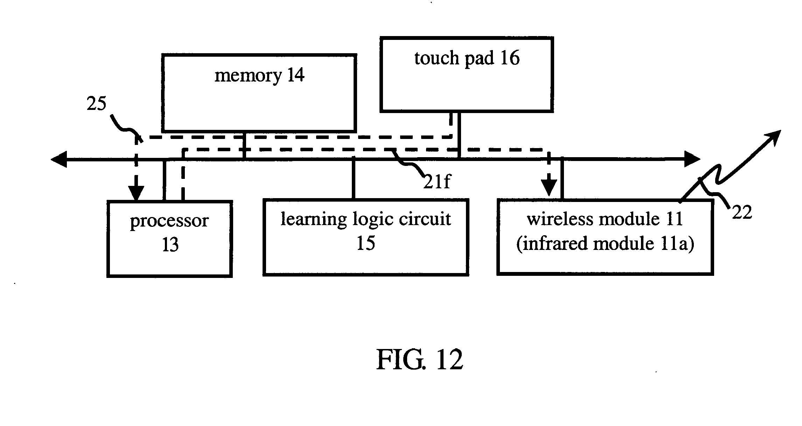

Please refer to FIGS. 11~12 for the seventh embodiment. The education-learning controller 10f comprises a casing 30f, a processor 13, a memory 14, a touch pad 16 and a wireless module 11 (e.g. an infrared module 11a). In comparison with the aforesaid embodiments, the learning cards 80f used with the education-learning controller 10f do not have identification codes, and each learning card 80f usually has several pictures (or words) thereon.

When using the education-learning controller 10f, the user usually uses a finger or a touch pen (stylus) 161 to press/point upon the learning card 80f, so that a point of the touch pad 16 is touched/actuated. Please note that the there are several technologies regarding touch pads, such as using "pressure-sense response", "electrical-sense response" or "magnetic-sense response." Some touch pads require a specific touch pen (not only a simple "rod"); as, for example, the touch pen used in Leap Pad™ (an educational product, made by Leap Frog ™).

The learning card (80f) can be placed on the touch pad 16, which is coupled to the processor 13 and mounted on the casing 30f. When the touch pad 16 is touched, a position related signal 25 is generated so that the processor 13 can generate an internal controlling code 21f in response to the position related signal 25. Because the technology regarding touch pads is well-known, further detailed description is not provided. For further reference, please refer to US Patent 6,369,721, US Patent 5,466,158, US Patent 5,088,928, or the educational product Leap Pad™.

Since the position related signal 25 represents which spot of the touch pad 16 has been touched, the processor 13 can determine which picture (i.e., position) has been touched. For example, when a picture of a dog 83 is touched, the processor 13 generates an internal controlling code 21f in response to the position related signal 25. Supposing that the video/audio content regarding "dog" is on "Section 5" of the DVD, then the internal controlling code 21f could be "005". The wireless module 11, in response to the internal controlling code 21f, generates a wireless controlling code 22 to control the video/audio player 90d.

The major difference between the education-learning controller 10f and the prior art touch-pad input device (e.g. US Patent 5,466,158, US Patent 5,088,928, or the educational product Leap Pad ™) is that the present invention can generate a wireless controlling code 22 to control the video/audio player 90d.

Please refer to FIGS. 13∼14 for the eighth embodiment. The video/audio player 90b combines ideas of the sixth and seventh embodiments. Compared to the seventh embodiment, the video/audio player 90b does not require a wireless module 11, but further comprises a host video/audio player 95b (e.g. a DVD player), a screen 92b, and a speaker 94b. As with the sixth embodiment, the host video/audio player 95b plays the corresponding digital media on the DVD 91 in response to the internal controlling code 21f.

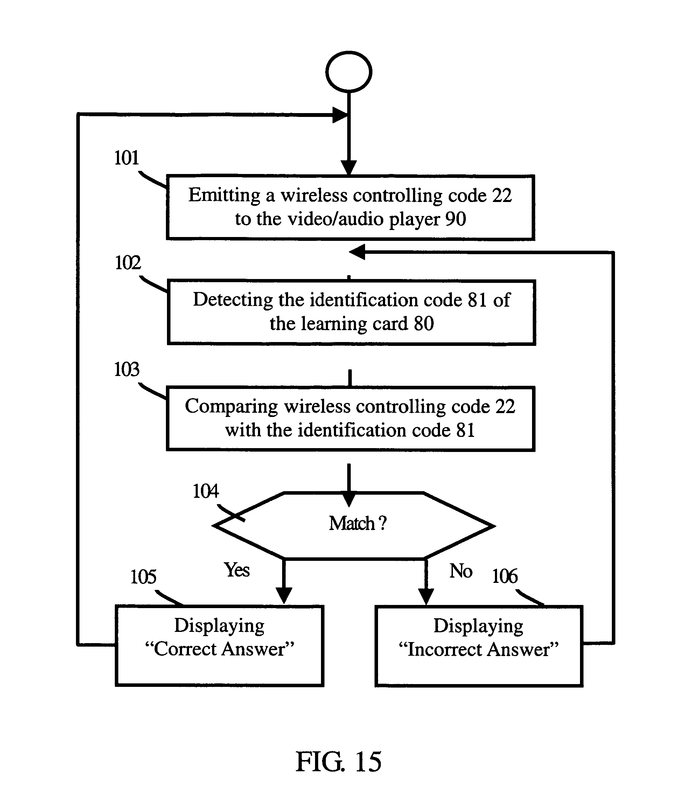

Please refer to FIG. 15 for a flowchart when the present invention is in a test mode, which can be applied to embodiments 1~5. The following flowchart uses the first embodiment shown in FIG. 1~3 as an example:

### Step 101:

The user actuates a test-mode switch 18 (FIG. 1 and FIG. 3) to cause the education-learning controller 10 to enter into a test mode; the "Menu" screen is also shown at this time. Initially, the processor 13 generates an internal controlling code 21; for example, "Section 5" may be generated in a random manner, and the wireless module 11, in response to the internal controlling code 21, emits a wireless controlling code 22 to the video/audio player 90. Supposing the wireless controlling code 22 represents "Section 5", then the video/audio player 90 plays "Section 5" of the DVD, and the video/audio content of "Section 5" is displayed on the television 99.

### Step 102:

After the video/audio content (e.g. "Section 5" of the DVD) is displayed on the television 99, the user chooses one learning card, which should correspond to the video/audio content (e.g. "Section 5" of the DVD), and places it in the slot 31. Therefore, the code detector module 12 can detect the identification code 81 of the learning card 80.

### Step 103:

The processor 13 compares whether the wireless controlling code 22 corresponds to the identification code 81.

### Step 104:

If there is a match, go to Step 105. For example, if the identification code 81 of the selected learning card 80 is about "Section 5", then the user is correct, since the video/audio player 90 played "Section 5" of the DVD in step 101.

If there is no match, go to Step 106. For example, if the identification code 81 of the selected learning card 80 is about "Section 6".

### Step 105:

Supposing a "Correct Answer" screen (not shown) is positioned at "Section 45" of the DVD, then the processor 13 generates the internal controlling code 21 to cause the wireless module 11 to emit the wireless controlling code 22 for "Section 45" for the DVD player 90d. After the "Correct Answer" screen has been displayed for a few seconds, the "Menu" is displayed, and Step 101 is performed again for the next test.

### Step 106:

Display an "Incorrect Answer" screen (not shown), which is similar to Step 105. For example, suppose the "Incorrect Answer" screen (not shown) is found at "Section 46" of the DVD. After the "Incorrect Answer" screen has been displayed for few seconds, Step 102 can be returned to so that the user may try again. Alternatively, Step 101 may be returned to so that the previous video/audio content (e.g. "Section 5" of DVD) is replayed, and then Step 102 is executed to enable the user to try again.

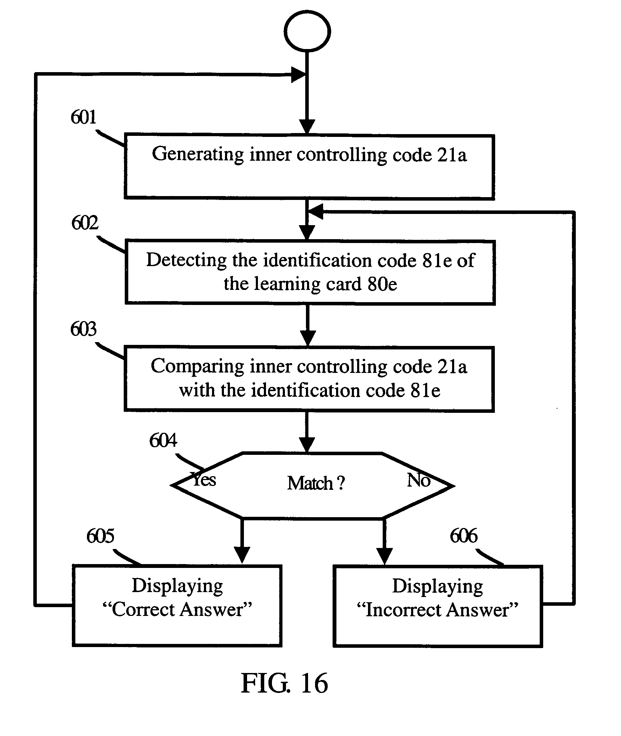

The test mode for the sixth embodiment is slightly different. Please refer to FIG. 9 and FIG. 16:

### Step 601:

The processor 951a of the video/audio player 90a generates an internal controlling code 21a; for example, "Section 5" may be generated in a random manner, so that the host video/audio player 95a plays "Section 5" of the DVD.

### Step 602:

In a manner similar to Step 102, the user chooses one learning card and places it in the slot 911a. Therefore, the code detector module 93a can detect the identification code 81e of the learning card 80e.

### Step 603:

The processor 951a compares whether the internal controlling code 21a corresponds to the identification code 81e.

Step 604 ∼ Step 606: These steps are respectively similar to step 104 ~ step 106.

Although the present invention has been explained in relation to its preferred embodiment, it is to be understood that many other possible modifications and variations can be made without departing from the spirit and scope of the invention as hereinafter claimed. For example, the video/audio player 90 could be a TV with Internet connectivity (e.g. through a Set-Top Box), or a computer with multimedia capabilities, so that the video/audio content can be stored on a remote server. In addition, the wireless controlling code 22 could be cursor signals and codes that specify website addresses, so that the web pages may be downloaded.

## Claims

1. An education-learning controller used with a set of learning cards wherein each of the learning cards is associated with at least an identification code to control a video/audio player, the education-learning controller comprising:
a processor;
a casing;
a code detector module coupled to the processor to detect the identification code of the learning card so that the processor can generate an internal controlling code in response to the identification code; and
a wireless module that in response to the internal controlling code generates a wireless controlling code to control the video/audio player.

2. The education-learning controller as claimed in claim 1, wherein the casing comprises a slot so that the learning cards can be placed in the slot , and the code detector module is disposed in a position to detect the identification code of the learning card.

3. The education-learning controller as claimed in claim 1, wherein the code detector module emits light to detect the identification code of the learning card.

4. The education-learning controller as claimed in claim 1, wherein the code detector module is disposed on the outside of the casing.

5. The education-learning controller as claimed in claim 3, wherein the casing has a hold member which can be held by a user.

6. The education-learning controller as claimed in claim 1, wherein the wireless module is an infrared module.

7. The education-learning controller as claimed in claim 1, wherein the video/audio player is a DVD player.

8. The education-learning controller as claimed in claim 1, wherein the education-learning controller enters into a test mode so that the processor can provide the internal controlling code.

9. A method for controlling a video/audio player comprising:
obtaining an identification code from a learning card; and
generating a wireless controlling code in response to the identification code to the video/audio player;
whereby in response to the wireless controlling code the video/audio player reads corresponding digital media to play corresponding video/audio content.

10. A learning test method used with a video/audio player comprising:
generating a wireless controlling code to the video/audio player so that the video/audio player reads corresponding digital media to play corresponding video/audio content;
obtaining an identification code from a learning card; and
comparing whether the wireless controlling code corresponds to the identification code.

11. A video/audio player comprising a host video/audio player for reading digital media to play video/audio content, **characterized in that** the video/audio player is used with a set of learning cards, wherein each of the learning cards is associated with at least an identification code in order to play the video/audio content, the video/audio player further comprising:
an operational area on which the learning cards can be placed;
a screen for showing the video content; and
a code detector module disposed on an appropriate position of the operational area to detect the identification code of the learning card so that the host video/audio player reads corresponding digital media to play corresponding video content on the screen.

12. The video/audio player as claimed in claim 11, wherein the operational area comprises at least one slot so that the learning cards can be placed in the slot.

13. A learning test method used in a video/audio player with a screen comprising:
generating an internal controlling code so that the video/audio player, in response to the internal controlling code, reads a corresponding digital media disposed on the video/audio player to play corresponding video content on the screen;
obtaining an identification code from a learning card; and
comparing whether the internal controlling code corresponds to the identification code.

14. An education-learning controller used with one or many learning cards to enable a user to use a finger or a tool to point or press the learning card to control a video/audio player, the education-learning controller comprising:
a processor;
a casing;
a touch pad coupled to the processor and mounted on the casing, wherein the learning card can be placed on the touch pad, and when the touch pad is touched, a position related signal is generated so that the processor 13 can generate an internal controlling code in response to the position related signal; and
a wireless module that in response to the internal controlling code generates a wireless controlling code to control the video/audio player.

15. The education-learning controller as claimed in claim 14, wherein the video/audio player is a DVD player.

16. A method for controlling a video/audio player comprising:
generating a position related signal in response to a touch upon a touch pad;
generating an internal controlling code in response to the position related signal; and
generating a wireless controlling code in response to the internal controlling code to the video/audio player;
whereby the video/audio player, in response to the wireless controlling code, reads corresponding digital media to play corresponding video/audio content.

17. A video/audio player comprising a host video/audio player for reading a digital media to play video/audio content, **characterized in that** the video/audio player is used with one or many learning cards to enable a user to use a finger or a tool to point or press the learning card in order to play the video/audio content, the video/audio player further comprising:
a processor;
a casing;
a screen for showing the video/audio content; and
a touch pad coupled to the processor and mounted on the casing, wherein the learning card can be placed on the touch pad, and when the touch pad is touched, a position related signal is generated so that the processor generates an internal controlling code in response to the position related signal;
whereby the host video/audio player, in response to the internal controlling code, reads corresponding digital media to play corresponding video/audio content on the screen.
